# EUROPÄISCHE PATENTSCHRIFT

(11) **EP 2 093 386 B1**
(45) Veröffentlichungstag und Bekanntmachung des Hinweises auf die Patenterteilung: **29.08.2018**
(21) Anmeldenummer: 09002145.2
(22) Anmeldetag: 16.02.2009
(51) Int. Cl.: F01D 25/20, F16N 7/40

(54) **Gasturbinenlagerölsystem mit Ölrücklauf**
Gas turbine bearing oil system with oil recirculation
Système de lubrification des paliers d'une turbine à gaz avec récupération d'huile

(30) Priorität: 19.02.2008 DE 102008009822
(43) Veröffentlichungstag der Anmeldung: 26.08.2009
(73) Patentinhaber: Rolls-Royce Deutschland Ltd & Co KG, 15827 Blankenfelde-Mahlow (DE)
(72) Erfinder: Pisseloup, Arnaud, 10405 Berlin (DE)
(74) Vertreter: Hoefer & Partner Patentanwälte mbB

(56) Entgegenhaltungen:
- FR-A1- 2 358 615
- US-A- 2 402 467
- US-A1- 2007 169 997

## Beschreibung

Die Erfindung bezieht sich auf ein Gasturbinenlagerölsystem gemäß dem Oberbegriff des Anspruches 1.

Im Einzelnen bezieht sich die Erfindung auf ein Ölsystem, bei welchem Öl von Lagerkammern einer Gasturbine mittels einer Rückführpumpeneinheit in einen Öltank zurückgeführt wird.

Ein derartiges Ölsystem ist beispielsweise aus der EP 1 561 908 A2 vorbekannt.

Vorbekannte Ölrückführsysteme von Lagerkammern von Gasturbinen verwenden zumindest eine Rückführpumpeneinheit. Dabei ist jede Lagerkammer mit einer eigenen Rückführpumpe verbunden. Die einzelnen Rückführpumpen werden über eine gemeinsame Antriebswelle angetrieben. Dabei ist die Ölpumpe zum Zuführen des Öls üblicherweise ebenfalls Teil der Rückführpumpeneinheit und wird mit dieser über die gleiche Antriebswelle angetrieben. Alle Pumpen werden somit durch eine oder zwei Antriebswellen mechanisch mit der Hochdruckwelle der Gasturbine über eine Getriebeeinheit verbunden. Dies bedeutet, dass beim Abschalten oder Herunterfahren der Gasturbine auch die Pumpen nicht mehr angetrieben werden.

Beim Abschalten der Gasturbine oder beim Stillstand der Gasturbine können somit Ölleckagen aus den Lagerkammern über die Luftdichtungen auftreten, wenn der Lager-Luftdruck absinkt und der Druck in der Lagerkammer somit auf einen niedrigeren Wert absinkt.

Die FR 2 358 615 A1 zeigt ein Gasturbinenlagerölsystem mit einer Ölsversorgung mit einem Öltank, aus welchem mittels einer Ölpumpe Öl zu einer Lagerkammer gepumpt wird. Das Öl wird nachfolgend gesammelt und mittels einer Rückführpumpe in den Öltank zurückgepumpt. Zusätzlich ist eine weitere Rückpumpleitung vorgesehen, welche über eine zusätzliche Rückführpumpe das aus der Lagerkammer austretende Öl in den Tank zurückfördert, wobei diese Pumpe durch einen Hydraulikmotor angetrieben wird. Der Hydraulikmotor wird durch einen Teil des zu der Lagerkammer geförderten Öls angetrieben.

Die US 2,402,467 A zeigt eine Gasturbinen-Lagerölversorgungsanordnung, bei welcher Öl aus einem Tank zu den Lagern gepumpt wird, wobei die Ölpumpe durch die Gasturbine angetrieben ist. In den Rücklaufleitungen von den Lagern zu dem Öltank sind jeweils elektrisch angetriebene Rückführpumpen vorgesehen.

Der Erfindung liegt die Aufgabe zugrunde, ein Gasturbinenlagerölsystem der eingangs genannten Art zu schaffen, welches bei einfachem Aufbau und einfacher, kostengünstiger Herstellbarkeit ein hohes Maß an Betriebssicherheit aufweist und Ölleckagen beim stillstehender Gasturbine oder beim Herunterfahren der Gasturbine vermeidet. Erfindungsgemäß wird die Aufgabe durch die Merkmalskombinationen des Anspruchs 1 gelöst, die Unteransprüche zeigen weitere vorteilhafte Ausgestaltungen der Erfindung.

Erfindungsgemäß ist somit vorgesehen, eine zusätzliche elektrische Rückführpumpe zur Rückführung von Öl aus zumindest einer der Lagerkammern zu dem Öltank vorzusehen.

Durch die erfindungsgemäße Ausgestaltung wird erreicht, dass die Rückführkapazität für Öl aus der Lagerkammer auch dann aufrecht erhalten wird, wenn die Gasturbine heruntergefahren wird oder abgeschaltet ist. Somit wird erfindungsgemäß sämtliches Öl aus der Lagerkammer zurückgeführt, so dass Ölleckagen nicht auftreten, da die Wahrscheinlichkeit, dass Öl durch die Luftströmung der Dichtung bei einer Strömungsumkehr der Lagerluft ausgespült wird, reduziert wird.

Weiterhin wird durch die Vermeidung einer Strömungsumkehr eine Druckumkehr innerhalb der Lagerkammer durch ausströmendes Öl vermieden. Auch dies erweist sich als vorteilhaft.

Die Erfindung ist nicht nur für unbelüftete Lagerkammern anwendbar, sondern kann auch bei belüfteten Lagerkammern vorgesehen sein.

Erfindungsgemäß ist somit eine zusätzliche elektrische Rückführpumpe vorgesehen, die auch gering dimensioniert sein kann und die separat angeordnet ist. Die elektrische erfindungsgemäß vorgesehene zusätzliche Rückführpumpe wird bevorzugterweise bei einem Abschalten oder Herunterfahren der Gasturbine aktiviert und führt dann die Ölrückführung (das Abpumpen des Öls) unabhängig davon durch, ob sich die Hochdruckwelle der Turbine noch dreht oder nicht.

Erfindungsgemäß ist es möglich, die elektrische Rückführpumpe (oder die mehreren elektrischen Rückführpumpen) jeweils in einem Bypass vorzusehen, der die mechanischen Pumpen der Pumpenrückführeinheit umgeht.

Besonders günstig ist es, dass erfindungsgemäß ein derartiger Bypass durch ein Absperrelement oder ein Ventil geschlossen wird, solange die Gasturbine läuft und die mechanische Rückführpumpeneinheit in Betrieb ist. Hierdurch werden Leckagen durch die elektrische Rückführpumpe beim Betrieb der mechanischen Rückführpumpeneinheit vermieden.

Das Absperrelement/Absperrorgan/Ventil kann beispielsweise mechanisch betätigt werden. Dies kann durch eine Druckdifferenz zwischen einer Druckquelle für die Lagerluft und einer anderen Druckquelle von der Lagerkammer erfolgen. Dabei wird der zur Verfügung stehende Druck während des Betriebs der Gasturbine in vorteilhafter Weise ausgenutzt.

Eine weitere Möglichkeit der mechanischen Betätigung des Absperrorgans besteht darin, den Öldruck in der Zuführleitung des Öls von der mechanischen Ölpumpe zu den Lagerkammern zu verwenden, um das Absperrorgan bei laufender Gasturbine zu schließen. Bei einem Abschalten oder Herunterfahren der Gasturbine erfolgt somit ein Druckabfall oder eine negative Druckdifferenz, die das Absperrorgan betätigen kann.

Die erfindungsgemäße, zumindest eine elektrische zusätzliche Rückführpumpe kann durch elektrische Energie angetrieben werden, die von einem zusätzlichen Generator, von einer

Hilfsenergieeinheit (APU) oder von einem IDG zugeführt wird. Es ist jedoch in besonders vorteilhafter Weise auch möglich, eine zusätzliche elektrische Energiespeicherung (Batterie) vorzusehen, da die elektrische Rückführpumpe nur für einen begrenzten Zeitraum betrieben werden muss, um beim Herunterfahren oder Beginn des Stillstands der Gasturbine das restliche Öl aus den Lagerkammern abzuführen. Insofern ist keine große Energiemenge zu speichern.

Erfindungsgemäß ist es somit vorteilhaft, dass das Öl aus den Lagerkammern über eine zumindest begrenzte, minimale Zeitdauer auch dann abgeführt werden und sich entsprechend ein Druckabbau in dem Ölsystem einstellt, wenn die Gasturbine abgeschaltet wird oder zum Stillstand kommt. Eine Druckumkehr in den Lagerkammern wird somit verhindert. Weiterhin wird die Gefahr von Ölleckagen vermieden, wodurch sich insgesamt ein verringerter Ölverbrauch ergibt.

Im Folgenden wird die Erfindung anhand eines Ausführungsbeispiels in Verbindung mit der Zeichnung beschrieben. Dabei zeigt:

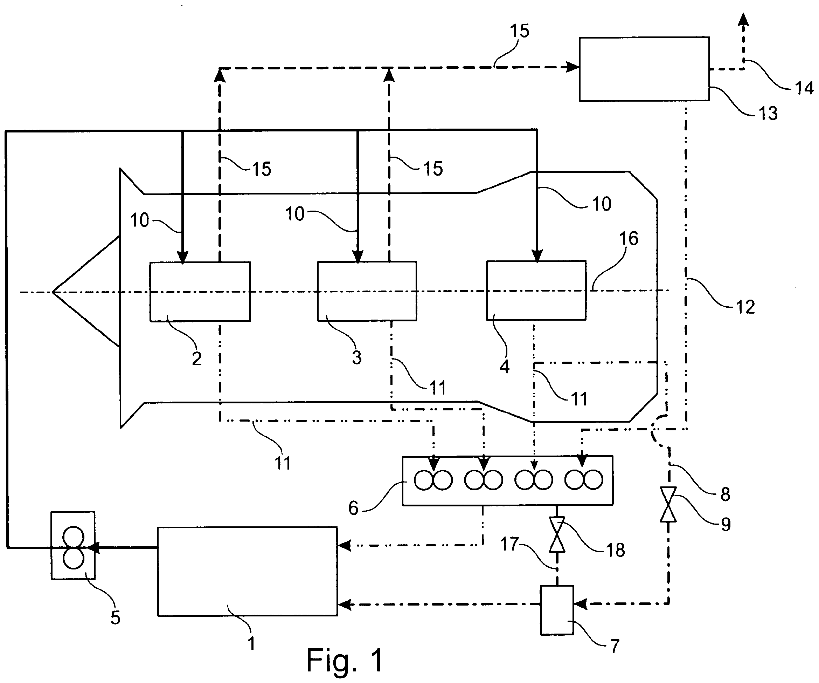

- Fig. 1: eine schematische Darstellung eines Gasturbinenöllagersystems.

Öl wurde in einem Öltank 1 bevorratet und mittels einer Ölpumpe 5 in belüftete Lagerkammern 2, 3 und eine unbelüftete Lagerkammer 4 gepumpt. Dies erfolgt über zumindest eine Zuführleitung 10. Weiterhin ist eine Rückführpumpeneinheit 6 vorgesehen, die mechanisch angetrieben wird und Öl aus den Lagerkammern 2, 3 und 4 über Rückführleitungen 11 in den Öltank 1 abführt.

Die Fig. 1 zeigt weiterhin einen Entlüfter 13 (breather), der über eine Entlüftungsleitung 15 mit den Lagerkammern 2, 3 und 4 verbunden ist, um Luft abzuführen und Öl abzuscheiden. Das Öl wird über eine Rückführleitung 12 zu der Rückführpumpeneinheit 6 zurückgeführt, während die Luft über eine externe Entlüftungsleitung 14 abgegeben wird.

Die Fig. 1 zeigt eine Maschinenachse 16.

Erfindungsgemäß ist zumindest eine elektrische Rückführpumpe 7 vorgesehen, die über eine Rückführleitung 8 mit zumindest der unbelüfteten Lagerkammer 4 verbunden ist. In der Rückführleitung 8 ist ein Absperrorgan 9 vorgesehen, welches mechanisch oder elektrisch betätigbar ist.

Weiterhin zeigt die Fig. 1 eine Rückführleitung 17, welche mit einem mechanischen Absperrorgan 18 (mechanisch oder elektrisch betätigbar) versehen ist, um bei Stillstand der mechanischen Rückführpumpeneinheit 6 Öl aus den Lagerkammern 2, 3 und 4 abzuführen.

### Bezugszeichenliste

- 1: Öltank
- 2: Belüftete Lagerkammer
- 3: Belüftete Lagerkammer
- 4: Unbelüftete Lagerkammer
- 5: Ölpumpe
- 6: Rückführpumpeneinheit
- 7: Elektrische Rückführpumpe
- 8: Rückführleitung
- 9: Absperrorgan
- 10: Zuführleitung
- 11: Rückführleitung
- 12: Rückführleitung
- 13: Entlüfter (breather)
- 14: Externe Entlüftungsleitung
- 15: Entlüftungsleitung
- 16: Maschinenachse
- 17: Rückführleitung
- 18: Absperrorgan

## Patentansprüche

1. Gasturbinenlagerölsystem mit einer Ölversorgung mit zumindest einer Öl aus einem Öltank (1) zu Lagerkammern (2, 3, 4) fördernden Ölpumpe (5) sowie zumindest einer Rückführpumpeneinheit (6) zur Rückführung von Öl aus den Lagerkammern (2, 3, 4) zu dem Öltank (1), **gekennzeichnet durch** zumindest eine zusätzliche elektrische Rückführpumpe (7) zur Rückführung von Öl aus zumindest einer Lagerkammer (2, 3, 4) zu dem Öltank (1), wobei die elektrische Rückführpumpe (7) separat zur Rückführpumpeneinheit (6) angeordnet ist, wobei die Rückführpumpe (7) mittels einer separaten Rückführleitung (8) betriebsverbunden ist, wobei die separate Rückführleitung (8) mit einem Absperrorgan (9) versehen ist.

2. System nach Anspruch 1, **dadurch gekennzeichnet, dass** die elektrische Rückführpumpe (7) bei stehender Gasturbine betreibbar ist.

3. System nach Anspruch 1 oder 2, **dadurch gekennzeichnet, dass** das Absperrorgan (9) durch Druckunterschiede der Lagerluft und des Lagerkammerinnendrucks mechanisch betätigbar ist.

4. System nach Anspruch 1 oder 2, **dadurch gekennzeichnet, dass** das Absperrorgan (9) durch einen Öldruck in dem System bei laufender Turbine betätigbar ist.

5. System nach einem der Ansprüche 1 bis 4, **dadurch gekennzeichnet, dass** die elektrische Rückführpumpe (7) mittels einer Gasturbinenenergieversorgung mit elektrischer Energie versorgt wird.

6. System nach einem der Ansprüche 1 bis 4, **dadurch gekennzeichnet, dass** die Rückführpumpe (7) mittels einer separaten Batterie mit elektrischer Energie versorgt wird.

## Claims

1. Gas-turbine bearing oil system with an oil supply including at least one oil pump (5) supplying oil from an oil tank (1) to the bearing chambers (2, 3, 4) and at least one recirculation pump unit (6) for the return of oil from the bearing chambers (2, 3, 4) to the oil tank (1), **characterized by** at least one additional electric recirculation pump (7) for the return of oil from at least one bearing chamber (2, 3, 4) to the oil tank (1), wherein the electric recirculation pump (7) is separately arranged from the recirculation pump unit (6), wherein the recirculation pump (7) is operationally connected via a separate return line (8), wherein the separate return line (8) is provided with a shut-off device (9).

2. System in accordance with Claim 1, **characterized in that** the electric recirculation pump (7) is actuatable when the gas turbine is out of operation.

3. System in accordance with Claim 1 or 2, **characterized in that** the shut-off device (9) is mechanically actuatable by pressure differences between the bearing air and the internal pressure of the bearing chamber.

4. System in accordance with Claim 1 or 2, **characterized in that** the shut-off device (9) is actuatable by an oil pressure in the system when the turbine is in operation.

5. System in accordance with one of the Claims 1 to 4, **characterized in that** the electric recirculation pump (7) is supplied with electric power via a gas-turbine power supply.

6. System in accordance with one of the Claims 1 to 4, **characterized in that** the recirculation pump (7) is supplied with electric power via a separate battery.

## Revendications

1. Système d'huile de paliers de turbine à gaz avec une alimentation en huile comprenant au moins une pompe à huile (5) fournissant de l'huile provenant d'un réservoir d'huile (1) vers les chambres de palier (2, 3, 4) ainsi qu'au moins une unité de pompe de refoulement (6) pour reconduire de l'huile provenant des chambres de palier (2, 3, 4) vers le réservoir d'huile (1), **caractérisé par** au moins une pompe de refoulement électrique supplémentaire (7) pour reconduire de l'huile provenant d'au moins une chambre de palier (2, 3, 4) vers le réservoir d'huile (1), sachant que la pompe de refoulement électrique (7) est disposée séparément de l'unité de pompe de refoulement (6), sachant que la pompe de refoulement (7) est reliée fonctionnellement au moyen d'une conduite de retour (8) séparée, sachant que la conduite de retour (8) séparée est pourvue d'un dispositif d'arrêt (9).

2. Système selon la revendication n° 1, **caractérisé en ce que** la pompe de refoulement électrique (7) est actionnable quand la turbine à gaz est arrêtée.

3. Système selon la revendication ° 1 ou n° 2, **caractérisé en ce que** le dispositif d'arrêt (9) est actionnable mécaniquement par le biais des différences de pression de l'air de palier et de la pression interne de la chambre de palier.

4. Système selon la revendication ° 1 ou n° 2, **caractérisé en ce que** le dispositif d'arrêt (9) est actionnable par une pression d'huile dans le système lorsque la turbine fonctionne.

5. Système selon une des revendications n° 1 à n° 4, **caractérisé en ce que** la pompe de refoulement électrique (7) est alimentée en énergie électrique au moyen d'une alimentation en énergie de turbine à gaz.

6. Système selon une des revendications n° 1 à n° 4, **caractérisé en ce que** la pompe de refoulement électrique (7) est alimentée en énergie électrique au moyen d'une batterie séparée.
